# EUROPÄISCHE PATENTSCHRIFT

(11) **EP 0 745 800 B1**
(45) Veröffentlichungstag und Bekanntmachung des Hinweises auf die Patenterteilung: **17.10.2001**
(21) Anmeldenummer: 96108546.1
(22) Anmeldetag: 29.05.1996
(51) Int. Cl.: F16L 11/00, F16L 33/207, F16L 11/08, F16L 11/04, B29C 63/20

(54) **Sanitärer Schlauch, Verfahren und Vorrichtung zu seiner Herstellung**
Sanitary hose, method and device for its manufacturing
Tuyau souple sanitaire, procédé et dispositif de fabrication

(30) Priorität: 01.06.1995 DE 19520195
(43) Veröffentlichungstag der Anmeldung: 04.12.1996
(73) Patentinhaber: Hansgrohe AG, 77761 Schiltach (DE)
(72) Erfinder: Bader, Rainer, 77761 Schiltach (DE); Ostertag, Gerd, 77793 Gutach (DE)
(74) Vertreter: Patentanwälte Ruff, Wilhelm, Beier, Dauster & Partner

(56) Entgegenhaltungen:
- EP-A- 0 685 676
- DE-A- 2 050 986
- DE-C- 645 917

## Beschreibung

Die Erfindung betrifft einen sanitären Schlauch, insbesondere einen Verbindungsschlauch zum Anschluß einer Sanitärarmatur an einer Wasserzuleitung mit einem flexiblen, mindestens einschichtigen Schlauchkörper und einem diesen im wesentlichen über seine gesamte Länge umgebenden Hüllschlauch. Zum wasserführenden Anschluß einer Sanitärarmatur an einen Wandanschluß, z.B. an ein Eckventil, werden anstelle der früher verwendeten Metallrohre, die sorgfältig zugebogen werden müssen, Druckschläuche verwendet. Diese Druckschläuche bestehen im wesentlichen aus einem Gummischlauch, der mit einem Metallgeflecht umgeben ist, um den Schlauch druckstabil zu machen. Die Enden des Anschlußschlauches sind mit Anschlußteilen, beispielsweise Anschlußnippeln, versehen, die am Wandanschluß und an der Wasserauslaufarmatur, beispielsweise einer Mischbatterie, wasserdicht angeschlossen werden können.

Bei farbigen Armaturen und Sanitärbecken ist es erwünscht, auch die Schläuche, insbesondere Anschlußschläuche, in entsprechender Farbe zu liefern. Es wurde deshalb schon vorgeschlagen, derartige Anschluß-Druckschläuche mit farbigen Hüllschläuchen zu überziehen, die auch das Drahtgeflecht vor Verschmutzung schützen. So ist es aus dem deutschen Gebrauchsmuster 80 21 251 bekannt, einen Anschlußschlauch für einen Waschtisch mit einem Schutzschlauch zu überziehen, der den sanitären Einrichtungen in der Farbe angepaßt ist. Der Schutzschlauch weist einen Innendurchmesser auf, der es erlaubt, ihn über den Anschlußschlauch zu schieben. Der Anschlußschlauch besitzt an seinen Enden Verbindungswülste größeren Durchmessers, an denen der Gummischlauch und der Geflechtsschlauch mit den Anschlußelementen verbunden sind. Durch Überschieben der Verbindungswülste wird der Schutzschlauch in seiner Lage fixiert. Im Bereich des Metall-Geflechtsschlauches liegt er lose über diesem.

Aus der DE 42 09 103 A1 ist es bekannt, bei Duschschläuchen eine elastische Schlauchverstärkung gegen Knick- und Zugbelastung vorzusehen. Hierzu wird ein Silikonschlauchstück mit einem Lösungsmittel, z.B. Nitroverdünnung, aufgeweicht und aufgeweitet und dann über das zu verstärkende Schlauchende geschoben. Nach Verdunstung des Lösungsmittels zieht sich der Silikonschlauch zusammen und liegt fest haftend auf dem darunter liegenden Schlauchende.

In der DE 43 20 475 A1, die den nächstkommenden Stand der Technik darstellt, ist ein Sanitärschlauch beschrieben, der ebenfalls mit einer farblichen angepaßten Schlauchhülle versehen ist. Die Schlauchhülle wird entweder lose aufgeschoben und stützt sich an den endseitigen Armaturenteilen ab, zwischen denen sie verschieblich liegt. Es ist auch erwähnt, daß die Schlauchhülle aufgeschrumpft oder durch Umspritzen des Innenschlauches aufgebracht werden kann. Die Enden der Schlauchhülle werden von aufgesteckten Blendkappen überdeckt, die die Anschlußstücke umgreifen.

Die bekannten Sanitärschläuche sind in der Herstellung recht kompliziert oder im Ergebnis nicht zufriedenstellend. Der Erfindung liegt deshalb die Aufgabe zu Grunde, einen Sanitärschlauch zu schaffen, der in einfacher Weise herstellbar ist, gute Gebrauchseigenschaften besitzt und ein optisch gutes Erscheinungsbild gibt.

Die Erfindung ist durch die Merkmale von Anspruch 1 gekennzeichnet. Gemäß der Erfindung sitzt der Hüllschlauch passend auf dem Schlauchkörper ohne diesen radial einzuengen, wie dies bei einem aufgeschrumpften Schlauch der Fall ist. Dadurch wird ein guter Sitz des Hüllschlauches auf dem Schlauchkörper erreicht. Der Schlauch fühlt sich kompakt an im Unterschied zu solchen Schläuchen, bei denen der Hüllschlauch sich nur an verdickten Anschlußteilen an den Enden des Schlauches fixiert und im übrigen lose über dem Schlauch liegt, so daß beim Zusammendrücken ein Zwischenraum zwischen Hüllschlauch und Schlauchkörper spürbar ist. Trotzdem ist der Hüllschlauch auf dem Schlauchkörper ausreichend verschieblich, so daß der Schlauchkörper bei der Montage gebogen werden kann, ohne daß seine Biegsamkeit durch einen zu fest sitzenden Hüllschlauch beeinträchtigt ist, wie dies bei aufgeschrumpften Schläuchen der Fall ist.

Der erfindungsgemäße Hüllschlauch hat vorzugsweise eine glatte Innenseite und liegt mechanisch auf der Oberfläche des Schlauchkörpers auf, ohne mit diesem durch besondere Verbindungsmittel wie Verklebung oder dergleichen verbunden zu sein. Durch das satte Aufliegen des Hüllschlauches auf dem Schlauchkörper ist er relativ zu diesem gegen einen Reibungswiderstand verschiebbar. Dieser liegt vorzugsweise im Bereich von 0,025 bis 0,125 kp/cm², insbesondere im Bereich von 0,05 bis 0,1 kp/cm². Dies entspricht bei einem Schlauchkörper von ca. 12 mm Durchmesser und einer Länge eines Hüllschlauchabschnittes von 10 cm einer Reibungskraft von ca. 1 bis 5, insbesondere 2 bis 4 kp. Die Länge des erfindungsgemäßen Sanitärschlauches liegt in der Regel in der Größe zwischen 20 und 50 cm. In besonderen Fällen kann der Schlauch jedoch auch wesentlich länger sein und insbesondere eine Länge bis zu 120 cm, insbesondere bis 200 cm, besitzen.

Der Schlauchkörper kann, insbesondere wenn er als Verbindungsschlauch ausgebildet ist, an seinen Enden Anschlußteile zur Montage des Schlauches aufweisen, deren Durchmesser größer ist als der des Schlauchkörpers. In der Regel ist mindestens ein Anschlußteil im Durchmesser mehr als 10 % größer, insbesondere ca. 15 % größer als der Durchmesser des Schlauchkörpers. Weiterhin ist vorzugsweise mindestens ein Anschlußteil im Durchmesser höchstens ca. 20 % größer als der Durchmesser des Schlauchkörpers. Der Schlauchkörper ist ein vorgefertigter Druckschlauch mit einem Geflechtsschlauch, der einen wasserdichten Innenschlauch, insbesondere aus elastomerem Material, umgibt. Derartige Druckschläuche weisen in der Regel ein Drahtgeflecht aus Scharen von parallel nebeneinander liegenden Drähten auf, wobei sich die Scharen im Geflecht in einem Winkel von ca. 90° kreuzen. Die Drähte bestehen in der Regel aus Metalldrähten. Es können jedoch auch Kunststoffdrähte sein. Derartige Geflechtschläuche sind nicht nur in hohem Maße druckfest, sondern auch torsionsstabil.

Der Hüllschlauch ist ein vorgefertigter Schlauch, der bei Umgebungstemperatur mindestens teilweise, insbesondere um mindestens 15 % seines Durchmessers, elastisch aufweitbar ist. In der Regel ist er um mindestens 25 % aufweitbar. Im entspannten Zustand, d.h. auch nach einer vorangegangenen Aufweitung, weist der Hüllschlauch vorzugsweise einen Innendurchmesser auf, der im wesentlichen gleich ist wie der Außendurchmesser des Schlauchkörpers. Vorzugsweise sind Innendurchmesser des Hüllschlauches und Außendurchmesser des Schlauchkörpers gleich groß. Die Struktur des Geflechtsschlauches ist an der Oberfläche des Hüllschlauches vorzugsweise gerade noch erkennbar, insbesondere sichtbar und/oder fühlbar. Eine solche geringfügige Abformung der Geflechtsstruktur ist ein Anzeichen für einen guten Paßsitz des Hüllschlauches.

Der Hüllschlauch hat, wie oben bereits erwähnt, in der Regel die Funktion eines Schutzschlauches und eines Dekorschlauches. Das Material des Hüllschlauches kann in der gewünschten Farbe massiv durchgefärbt sein. Bei einer besonderen Ausführungsform der Erfindung ist der Hüllschlauch an einer Oberfläche, insbesondere seiner Außenfläche, mit einer gesonderten Farbschicht versehen, die insbesondere eine Metallisierung ist. Bei einer bevorzugten Ausführungsform ist die Farbschicht von einer Heißprägefolie gebildet, die die Oberfläche des Hüllschlauches vorzugsweise vollständig bedeckt.

Heißprägefolien sind dünne wärmewirksame Kleberschichten, die auf einer Seite eine Metallisierung oder sonstige Einfärbung aufweisen und durch Anwendung von Wärme und Druck auf Oberflächen aufgebracht werden können. Die Heißprägefolie ist durch Verklebung mit der Oberfläche des Hüllschlauches verbunden. Die Einfärbung bzw. Metallisierung befindet sich in der Regel auf einer Oberflächenseite der Kleberschicht, vorzugsweise auf deren Außenseite. Dies ist insbesondere bei solchen Metallisierungen bzw. Einfärbungen der Fall, die durch Aufsprühen oder Aufdampfen hergestellt sind. Die Kleberschicht der Heißprägefolie kann aber auch durchgefärbt sein, so daß sich die Farbpigmente, insbesondere Metallpigmente, in der gesamten Kleberschicht befinden. Die metallisierte oder eingefärbte Kleberschicht ist häufig mit einem Schutzlack überzogen, der vorzugsweise Teil der Heißklebefolie ist. Der Schutzlack ist vorzugsweise ein Klarlack. Der Schutzlack kann selbst eingefärbt sein, um der metallisierten oder sonstwie eingefärbten Kleberschicht gewünschte Farbeffekte zu verleihen. So kann beispielsweise bei gleicher Metallisierung, z.B. aus Aluminium, durch Einfärbung des Klarlacks die Farbe eines anderen Metalls, z.B. Chrom, Messing und Kupfer, imitiert werden. Die Anschlußteile des Sanitärschlauches können dann die gleiche Farbe besitzen. Für die Durchführung der Heißprägung befindet sich die Heißprägefolie in der Regel auf einem Trägerband, das nach dem Aufprägen der Heißprägefolie abgezogen wird. Zwischen Trägerband und Kleberschicht bzw. Schutzlack kann sich eine Trennschicht befinden, die das Abziehen des Trägerbandes erleichtert. Überraschenderweise hat es sich gezeigt, daß die auf die Oberfläche des Hüllschlauches aufgeprägte Heißprägefolie mit ihrer eingefärbten und/oder metallisierten Schicht Bewegungen des Hüllschlauches, insbesondere Dehnungen und Stauchungen mitmacht, ohne unerwünschte Risse oder Runzeln zu zeigen. Die mit dem Hüllschlauch verbundene Heißprägefolie ist somit ein integrierter Bestandteil des Schlauchmaterials des Hüllschlauches. Die Materialstärke der Heißprägefolie ist in der Regel außerordentlich gering und kann im Bereich von 2 *µ*m bis 20 *µ*m, insbesondere 3 *µ*m bis 5 *µ*m liegen. Für die Metallisierung bzw. sonstige Einfärbung reicht in der Regel eine Schichtdicke im Bereich von 0,02 *µ*m bis 0,03 *µ*m aus. Die Kleberschicht kann ein- oder mehrlagig sein. In der Regel reichen hier Schichtdicken von 1,5 *µ*m bis 3 *µ*m aus. Das Material der Kleberschicht wird dem in der Regel thermoplastischen Material des Hüllschlauches angepaßt, um eine gute Haftverbindung zu erreichen. Der Schutzlack kann, falls ein solcher vorgesehen ist, eine Stärke im Bereich von 1 *µ*m bis 1,5 *µ*m besitzen. Sind größere mechanische Beanspruchungen zu erwarten, kann der Schutzlack auch dicker sein.

Die Heißprägefolie ist mit Vorteil bandförmig ausgebildet. Sie kann in Längsrichtung verlaufend auf dem Schlauch angeordnet sein, insbesondere in Form mehrerer parallel verlaufender Bänder. Es ist aber auch eine wendelförmig verlaufende Anordnung auf dem Schlauch möglich. Die Heißklebefolien können unter gegenseitiger Überlappung ihrer Ränder auf dem Hüllschlauch angeordnet sein. Dies ist insbesondere bei Heißklebefolien mit geringer Materialstärke bevorzugt. Die Heißklebefolien können auch so angeordnet sein, daß die Ränder fugenlos auf Stoß zueinander angeordnet sind und an den Stoßstellen miteinander verklebt bzw. verschweißt sind. Heißprägefolien werden normalerweise auf feste und insbesondere ebene Oberflächen aufgebracht. Häufig werden nur bestimmte Flächenbezirke auf die Unterlage aufgeprägt. Kunststoffschläuche, insbesondere flexible Kunststoffschläuche, sind demgegenüber labile Unterlagen, die eine gewölbte Oberfläche aufweisen. Es können jedoch auch flexible Kunststoffschläuche durch Heißprägung metallisiert bzw. eingefärbt werden, wenn sie mindestens während des Auflegens und Aufprägens der Heißprägefolie in im wesentlichen druckstabiler Form vorliegen. Eine solche druckstabile Form kann dadurch erzielt werden, daß ein Kunststoffschlauch verwendet wird, der sich flach zusammenlegen läßt. Es ist aber auch möglich und bevorzugt, den Kunststoffschlauch zur Erzeugung einer ausreichenden Druckstabilität mit einem Innendruck, insbesondere einem Gasinnendruck zu beaufschlagen. Ein solcher Innendruck kann im Bereich von ca. 1 bis 5 bar liegen. Die Heißprägung des Hüllschlauches wird vorzugsweise kontinuierlich und insbesondere vollflächig durchgeführt, indem der Hüllschlauch relativ zu einem Heißprägewerkzeug bewegt wird, das insbesondere die Form von Heißprägewalzen haben kann.

Die Erfindung betrifft auch ein Verfahren zur Herstellung des Schlauches, insbesondere zum Überziehen von vorgebildeten Schlauchkörpern vorbestimmter Länge mit einem Hüllschlauch. Das Verfahren ist durch die Merkmale des Anspruchs 9 gekennzeichnet.

Dieses Verfahren kann sehr schnell und ökonomisch durchgeführt werden. Der Schlauchkörper kann über seine volle Länge mit dem Hüllschlauch überzogen werden. Sofern der Schlauchkörper bereits mit Anschlußnippeln versehen ist, können auch diese in gewünschtem Maße mit überzogen werden, wobei zweckmäßigerweise Ansatzflächen für Montagewerkzeuge, wie Schlüsselflächen, ausgespart werden. Die elastische Aufweitung und Verjüngung wird mit Vorteil im wesentlichen bei Umgebungstemperatur durchgeführt. Es sind somit keine Temperaturveränderungen oder andere Hilfsmittel, wie Lösungsmittel oder dergleichen, zur Einwirkung auf den Hüllschlauch erforderlich. Das Aufweiten des Hüllschlauches wird mit Vorteil abschnittsweise durchgeführt, wobei vorzugsweise Längsabschnitte des Hüllschlauches aufgeweitet werden, die etwas länger sind als die Länge des zu überziehenden Schlauchkörpers. Der aufzuweitende Schlauchabschnitt kann dabei vorzugsweise ein Endstück eines langen Schlauchvorrates sein. Es ist dadurch möglich, den Schlauchabschnitt vom Schlauchvorrat erst nach dem Überziehen des Schlauchkörpers abzulängen, so daß die Länge des Hüllschlauchabschnittes automatisch der Länge des Schlauchkörpers angepaßt werden kann.

Das Innere des Hüllschlauches wird vorzugsweise mit einem höheren Druck beaufschlagt, als zur Aufweitung des Hüllschlauches auf den zum Einschieben des Schlauchkörpers benötigten erweiterten Durchmesser erforderlich ist. Diese Maßnahme erlaubt ein schnelles und sicheres Arbeiten. Insbesondere um eine Überdehnung des Hüllschlauches zu vermeiden und den Hüllschlauch während des Überziehens des Schlauchkörpers bzw. Einführens des Schlauchkörpers in den aufgeweiteten Hüllschlauch mechanisch zu stabilisieren, wird die Aufweitung des Hüllschlauches während der Beaufschlagung mit Druck, insbesondere Druckluft mit Vorteil mechanisch begrenzt. Zu diesem Zweck kann die Aufweitung des Hüllschlauches gegen die Innenwandung einer rohrförmigen Hülse vorgenommen werden, an die sich der Hüllschlauch anlegt. Diese Hülse kann porös oder gelocht sein, um etwaige Luftpolster zwischen Hüllschlauch und Hülse beim Aufweiten zu vermeiden. Während des Aufweitens und während der Relativbewegung zwischen Hüllschlauch und Schlauchkörper ist der Hüllschlauch vorzugsweise mindestens teilweise durchströmt. Hierzu kann der Hüllschlauch an mindestens einem Ende teilweise offen sein, damit die Druckluft entweichen kann. Durch eine solche dynamische Aufweitung erübrigen sich Dichtprobleme.

Bei einer besonders bevorzugten Ausführungsform der Erfindung wird die zum Aufweiten des Hüllschlauches benötigte Druckluft durch den zu überziehenden Schlauchkörper in den Hüllschlauch eingeführt. Hierzu kann ein in relativer Vorschubrichtung weisendes Ende des Schlauchkörpers an ein freies Ende des Hüllschlauches herangeführt werden. Aus dem Schlauchkörperende ausströmende Druckluft gelangt in den Hüllschlauch und weitet diesen auf, so daß der Schlauchkörper relativ zum aufgeweiteten Hüllschlauch in diesen eingeführt werden kann. Der enge Spalt zwischen Schlauchkörper und Hüllschlauch, der durch den Aufweitbegrenzer definiert wird, sorgt für einen ausreichenden Gegendruck im Hüllschlauch, so daß dieser während der Druckbeaufschlagung in aufgeweitetem Zustand verbleibt. Der zu überziehende Schlauchkörper kann während des Überzugsvorganges auf einem Dorn gehalten werden, der den flexiblen Schlauchkörper in gestreckter Lage stabilisiert. Mit besonderem Vorteil ist der Dorn als druckluftführender Hohldorn ausgebildet. Es reicht somit aus, den zu überziehenden Schlauchkörper lediglich auf den Hohldorn zu stecken, ohne daß ein Anschluß des Schlauchkörpers an die Druckluftleitung erforderlich ist. Gleichzeitig bleibt das Innere des Schlauchkörpers von der Druckluft im wesentlichen unbelastet, wodurch eine etwaige unerwünschte geringfügige Durchmesseraufweitung des Schlauchkörpers während des Überzugsvorganges vermieden werden kann.

Während der Aufweitung ist ein Ende des Hüllschlauchabschnittes, das vorzugsweise noch mit dem Schlauchvorrat verbunden ist, verschlossen, insbesondere reversibel zugequetscht. Ist der Schlauchkörper vollständig in den aufgeweiteten Hüllschlauchabschnitt eingeführt, kann die Druckluftzufuhr abgestellt werden, wodurch infolge des Druckabbaues die Aufweitung automatisch rückgängig gemacht wird und sich der Hüllschlauch über den eingeführten Schlauchkörper legt. Nach Öffnen des Verschlusses kann der überzogene Schlauchkörper mit dem darüber befindlichen Hüllschlauch abgezogen, insbesondere aus dem Aufweitbegrenzer herausgezogen werden. Da das verschlossene Ende des Hüllschlauchabschnittes vorzugsweise noch mit einem Schlauchvorrat verbunden ist, wird automatisch ein neuer Hüllschlauchabschnitt abgezogen. Durch entsprechendes Ablängen des Hüllschlauches am überzogenen Schlauchkörper, insbesondere im Bereich eines mindestens teilweise mit überzogenen Anschlußteils, ist der Überzugsvorgang fertig und ein neuer Schlauchkörper kann unter gleichzeitiger Aufweitung des neuen Hüllschlauchabschnittes in diesen eingeführt werden.

Die Erfindung betrifft auch eine Vorrichtung zur Durchführung des Verfahrens und zur Herstellung des erfindungsgemäßen Sanitärschlauches. Diese Vorrichtung ist gekennzeichnet durch eine reversible Aufweiteinrichtung für den Hüllschlauch, eine Halteeinrichtung für den flexiblen Schlauchkörper und eine Vorschubeinrichtung zum relativen Ineinanderschieben von Schlauchkörper und Hüllschlauch. Da die Schlauchkörper vorgefertigt sind und eine vorbestimmte Länge besitzen, die verschieden sein kann, arbeitet die erfindungsgemäße Vorrichtung vorzugsweise taktmäßig bzw. abschnittsweise durch Hin- und Herbewegung.

Die Aufweiteinrichtung ist mit besonderem Vorteil eine pneumatisch arbeitende Aufweiteinrichtung, die insbesondere mit Druckluft arbeitet. Dabei hat sich überraschenderweise herausgestellt, daß der Druckluftverbrauch trotz der dynamischen Arbeitsweise gering ist, was auf die engen Luftspalte zwischen aufgeweitetem Hüllschlauch und Schlauchkörper zurückzuführen ist.

Dieser Luftspalt kann definiert werden durch einen vorzugsweise vorgesehenen Aufweitbegrenzer für den Hüllschlauch, der vorzugsweise rohrförmig ist und den Hüllschlauch während der Aufweitung umgibt. Die Halteeinrichtung für den Schlauchkörper ist mit Vorteil gleichzeitig Teil der Aufweiteinrichtung und weist insbesondere einen mit einer Druckluftquelle verbindbaren Hohldorn auf, auf dem der zu überziehende Schlauchkörper während des Aufweitvorganges angeordnet ist. Gleichzeitig zentriert die Halteeinrichtung den Schlauchkörper beim Einführen in den aufgeweiteten Hüllschlauch. Die Halteeinrichtung ist mit Vorteil mit einer Vorschubeinrichtung verbunden, die den auf der Halteeinrichtung angeordneten Schlauchkörper in den aufgeweiteten Hüllschlauch einführt. Es ist aber auch möglich, eine Vorschubeinrichtung am aufgeweiteten Hüllschlauchabschnitt vorzusehen, die den aufgeweiteten Hüllschlauch über den zentrierten Schlauchkörper schiebt. Die Vorschubeinrichtung ist, wie oben bereits erwähnt, vorzugsweise vor- und zurückbewegbar und dient bei der Rückwärtsbewegung vorzugsweise auch als Abzieheinrichtung des Hüllschlauches von einem Vorrat und insbesondere als Einziehvorrichtung zum Einziehen eines neuen Hüllschlauchabschnittes in die Aufweiteinrichtung.

Der erfindungsgemäßen Vorrichtung ist weiterhin mit Vorteil noch eine Schneidevorrichtung zugeordnet, die Hüllschlauchabschnitte in geeigneter Länge, insbesondere bereits auf dem Schlauchkörper befindliche Hüllschlauchabschnitte von einem Hüllschlauchvorrat ablängt. Die Aufweiteinrichtung besitzt vorteilhafterweise noch eine Abdichteinrichtung, insbesondere eine Klemmeinrichtung, die den aufzuweitenden Hüllschlauchabschnitt an einer Stelle, die insbesondere noch zu einem Schlauchvorrat gehört, vor Beginn der Aufweitung abdichtet.

Der Aufweitbegrenzer besitzt mit Vorteil einen lichten, insbesondere kreisförmigen Querschnitt, dessen Innendurchmesser um ca. 10 bis 30 %, insbesondere um ca. 20 % größer ist als der Durchmesser des dicksten, in den aufgeweiteten Schlauch einzuführenden Teils des Schlauchkörpers, der auch ein zu überziehender Teil sein kann. Dabei hängt die absolute Maßdifferenz zwischen dem Durchmesser des Schlauchkörpers und dem Innendurchmesser des Aufweitbegrenzers auch davon ab, wie dick die Wandstärke des Hüllschlauches ist. Diese liegt in der Regel zwischen 4 und 8 % des Durchmessers des Schlauchabschnittes des Schlauchkörpers. Bei einem Schlauchkörper von beispielsweise 10 bis 15 mm, insbesondere ca. 12 mm Durchmesser kann die Wandstärke des Hüllschlauches im Bereich zwischen 0,2 und 1,0 mm, insbesondere zwischen 0,3 und 0,8 mm, liegen. Durch entsprechend geeignete Abstimmung zwischen maximalem Durchmesser des Schlauchkörpers, Wandstärke des Hüllschlauches und Innendurchmesser des Aufweitbegrenzers kann der Ringspalt für das Ausströmen von Preßluft während des Überzugsvorganges auf das gewünschte Maß eingestellt werden, das ein schnelles und störungsfreies Arbeiten ermöglicht.

Weitere Merkmale der Erfindung ergeben sich aus der nachfolgenden Beschreibung von bevorzugten Ausführungsformen in Verbindung mit der Zeichnung und den Unteransprüchen. Hierbei können die einzelnen Merkmale jeweils für sich allein oder in Kombination miteinander verwirklicht sein. In der Zeichnung zeigen:
- Fig. 1: einen teilweise geschnittenen Sanitärschlauch gemäß einer Ausführungsform der Erfindung und
- Fig. 2: eine schematische Seitenansicht einer Ausführungsform der Vorrichtung zur Herstellung des Sanitärschlauches.

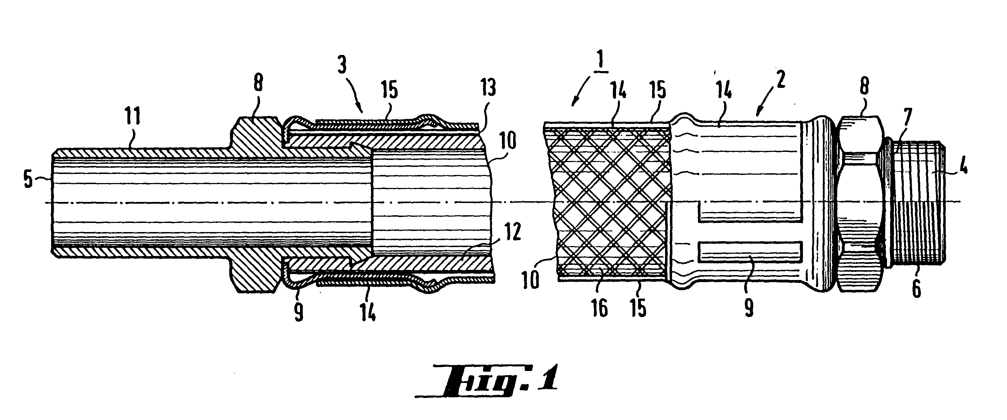

Der in Fig. 1 dargestellte Sanitärschlauch 1 ist ein Druckschlauch zum Anschluß einer Sanitärarmatur an eine Wasserleitung. Der Druckschlauch hat eine Länge von 30 cm und ist an seinen Enden 2 und 3 mit Anschlußnippeln 4 und 5 versehen, wobei der Anschlußnippel 4 ein Anschlußgewinde 6, einen Dichtring 7 und einen Sechskant 8 zum Ansetzen eines Schraubenschlüssels aufweist, ferner einen Klemmbund 9 in Form einer Metallhülse, die den Schlauchkörper 10 abdichtend mit dem Nippel 4 verbindet. Der Anschlußnippel 4 dient zur Verschraubung an einer Sanitärarmatur. Der Anschlußnippel 5 weist einen im wesentlichen zylindrischen Steckeinsatz 11 zum Einstecken in ein Eckventil eines Wandanschlusses auf, ferner einen Sechskant 8 und einen Klemmbund 9, der das andere Ende des Schlauchkörpers 10 mit dem Anschlußnippel 5 abdichtend verbindet. Der Schlauchkörper besteht aus einem Gummischlauch 12, der mit einem Drahtgeflecht 13 umgeben ist. Der Schlauchkörper 10 und ein Teil der Anschlußnippel 4 und 5, nämlich der größte Teil der Klemmbunde 9, sind mit einem Hüllschlauch 14 umgeben, der dicht am Drahtgeflecht 13 des Schlauchkörpers 10 anliegt. Der Schlauchkörper 10 hat einen Außendurchmesser von 12 mm. Der Hüllschlauch 14 besitzt eine Wandstärke von 0,6 mm. Sein Innendurchmesser beträgt ebenfalls 12 mm, abgesehen von den Stellen der Anschlußnippel, die einen größeren Durchmesser besitzen und die vom Hüllschlauch umgeben sind. Die wulstartigen Enden der Klemmbunde 9 sowie die Sechskante 8 der Anschlußnippel sind die Teile des mit den Anschlußnippeln versehenen Schlauchkörpers, die die größten Durchmesser besitzen. Diese liegen bei ca. 14 mm und sind somit um ca. 17 % größer als der Durchmesser des Schlauchkörpers 10 im Bereich des Drahtgeflechts 13.

Der Hüllschlauch 14 besteht aus Weichpolyvinylchlorid und ist um mindestens 25 % seines Durchmessers bzw. Umfanges aufweitbar. Seine Oberfläche ist silbrig metallisiert. Die Metallisierung besteht aus sich überlappenden Streifen von Heißprägefolien 15, die eine Aluminiumbedampfung aufweisen und die Oberfläche des Hüllschlauches 14 überdecken. Über der Metallisierung befindet sich ein Schutzlack, der bereits Teil der Heißprägefolie sein kann, oder ein durchsichtiger Kunststoffüberzug. Der Hüllschlauch 14 ist durch den engen Paßsitz auf dem Schlauchkörper 10 bzw. dem Drahtgeflecht 13 mechanisch mit dem Schlauchkörper 10 verbunden. Durch den im Durchmesser paßgenauen Sitz auf dem Drahtgeflecht ist dessen Struktur durch die Oberfläche des Hüllschlauches gerade noch erkennbar, wie dies bei 16 schematisch angedeutet ist. Der Hüllschlauch wird beim Anfassen des Sanitärschlauches somit als integrierter Bestandteil des Sanitärschlauches empfunden. Dadurch, daß er wegen der Durchmessergleichheit jedoch im wesentlichen ohne Spannung auf dem Schlauchkörper sitzt, ist er relativ zu diesem gegen einen Reibungswiderstand verschiebbar, insbesondere wenn der Sanitärschlauch gebogen oder, was bei dem Geflechtsschlauch in begrenztem Maße möglich ist, gestreckt wird. Dadurch wird die Bewegung des Sanitärschlauches durch den Hüllschlauch nicht behindert. Der Hüllschlauch fixiert sich zwar bei der dargestellten Ausführungsform zusätzlich auf den Klemmbund 9 der Anschlußnippel, insbesondere an deren Stellen mit größerem Durchmesser. Es ist jedoch auch möglich, den Hüllschlauch an den Übergängen vom Drahtgeflecht 13 in die Anschlußnippel 4 bzw. 5 vor diesen enden zu lassen, so daß sie Klemmbunde 9 nicht übergreifen. Dies ist im Bereich des Anschlußnippels 4 andeutungsweise dargestellt. Aufgrund des Paßsitzes und des Reibungswiderstandes fixiert sich der Hüllschlauch ausreichend auf den Schlauchkörper 10, so daß besondere Befestigungsmittel, wie Endkappen oder dergleichen, nicht erforderlich sind.

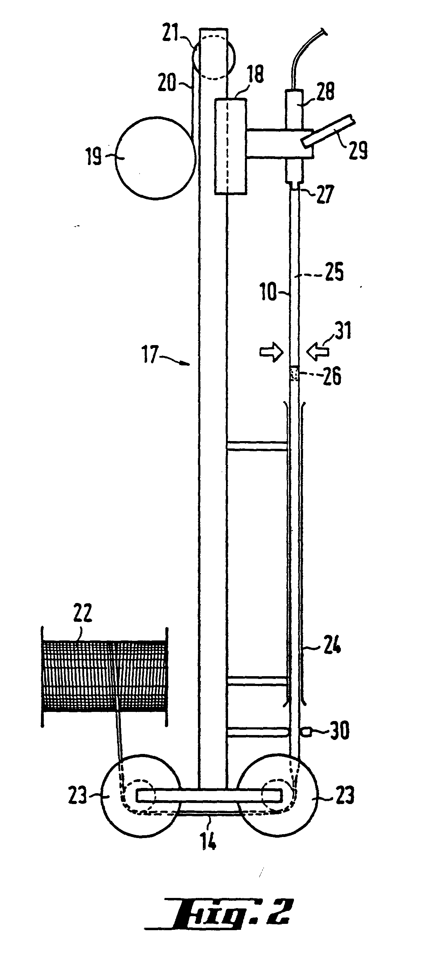

Die in Fig. 2 dargestellte Vorrichtung zur Herstellung des erfindungsgemäßen Sanitärschlauches weist ein vertikal angeordnetes Gestell 17 auf, auf dem ein Schlitten 18 vertikal verfahrbar ist, der als Vorschubeinrichtung dient. Dem Schlitten 18 ist eine Federeinrichtung 19 zugeordnet, die über ein Drahtseil 20 und eine am oberen Ende des Gestells angeordnete Umlenkrolle 21 mit dem Schlitten 18 verbunden ist und dessen Gewicht im wesentlichen aufhebt.

Am unteren Ende des Gestells befindet sich eine Vorratsrolle 22, auf die ein Vorrat an Hüllschlauch 14 aufgewickelt ist. Der Hüllschlauch kann von der Vorratsrolle 22 über zwei am unteren Ende des Gestells befindliche Umlenkrollen 23 abgezogen und in ein Führungsrohr 24 eingeführt werden, das parallel zur Schlittenführung bzw. zum Gestell 17 angeordnet ist und zur Ausrichtung des Hüllschlauches 14 und als dessen Aufweitbegrenzer dient. Auf dem Schlitten 18 sitzt ein Hohldorn 25, der koaxial zum Führungsrohr 24 angeordnet ist und der beginnend mit seinem freien Ende 26 vollständig in das Führungsrohr 24 einführbar ist. Das entgegengesetzte Ende 27, mit dem der Hohldorn 25 am Schlitten 18 befestigt ist, ist mit einem Druckgasventil 28 ausgerüstet, das mit einer Druckgasleitung verbindbar und durch Niederdrücken eines Bedienungsgriffs 29 betätigbar ist. Mit Hilfe dieses Griffs kann auch der Schlitten zusammen mit dem Hohldorn nach unten gefahren werden.

Auf den Hohldorn 25 ist ein Schlauchkörper 10 aufschiebbar, der an seinen Enden mit Anschlußnippeln 4 und 5 versehen sein kann. Der Schlauchkörper kann auf dem Hohldorn mit Hilfe eines nicht dargestellten Rastgliedes gehalten werden.

Die erfindungsgemäße Vorrichtung weist weiterhin noch eine Klemmeinrichtung 30 im unteren Bereich des Gestells auf, die zwischen dem Führungsrohr 24 und der benachbarten Umlenkrolle 23 angeordnet ist und an einem zwischen Umlenkrolle und Führungsrohr befindlichen Abschnitt des Hüllschlauches 14 angreift. Die Klemmeinrichtung 30 wird über das Druckgasventil gesteuert und schließt, wenn der Bedienungsgriff 29 nach unten gedrückt wird und Druckgas durch den Hohldorn 25 strömt. Beim Einführen des Hohldorns 25 mit dem Schlauchkörper 10 in das Führungsrohr 24, in dem sich ein Abschnitt des Hüllschlauches 14 befindet, wird der Hüllschlauch mit Hilfe des Druckgases aufgeweitet und legt sich infolge des im Hüllschlauch aufgebauten Druckpolsters und der verschlossenen Klemmeinrichtung 30 an der Innenwand des Führungsrohres 24 an, dessen Wandung feine Öffnungen besitzt, durch die zwischen Hüllschlauch 14 und Führungsrohr 24 befindliche Luft entweichen kann. Infolge der Durchmesseraufweitung des Hüllschlauches ist dessen Lumen so groß, daß der Schlauchkörper mit samt einem etwaigen, am freien Ende 26 des Hohldorns 25 befindlichen Anschlußnippel 5 durch den Hüllschlauch hindurch in das Führungsrohr 24 eingeführt werden kann. Durch Hochheben des Bedienungsgriffs 29 wird das Druckgasventil 28 geschlossen und der Druck im System abgebaut, wodurch sich der Hüllschlauch im Durchmesser verringert und über den Schlauchkörper 10 legt. Gleichzeitig öffnet die Klemmeinrichtung 30. Der Hohldorn 25 kann nunmehr zusammen mit dem aufgesteckten Schlauchkörper 10 und dem darübergezogenen Hüllschlauchabschnitt aus dem Führungsrohr 24 gezogen werden, wobei ein neuer Hüllschlauchabschnitt von der Vorratsrolle 22 abgezogen und in das Führungsrohr 24 eingeführt wird. Mittels einer im Bereich der Mündungsöffnung des Führungsrohres 24 angeordneten Schneideeinrichtung 31 kann der neue Hüllschlauchabschnitt an geeigneter Stelle vom überzogenen Schlauchkörper 10 abgelängt werden, so daß der Vorgang von neuem beginnen kann. Hierzu wird auf den Hohldorn 25 ein neuer Schlauchkörper 10 aufgeschoben. Es ist auch möglich, mehrere Hohldorne schwenkbar am Gestell 17 anzuordnen, die der Reihe nach mit Schlauchkörpern 10 bestückt werden und nacheinander zum Überziehen der Schlauchkörper in das Führungsrohr 24 einführbar sind. Die Vorrichtung kann ohne wesentliche Änderungen auch vollautomatisch betreibbar sein.

## Patentansprüche

1. Sanitärschlauch, insbesondere Verbindungsschlauch zum Anschluss einer Sanitärarmatur an eine Wasserzuleitung, mit einem vorgebildeten, flexiblen, mindestens einschichtigen Schlauchkörper (10) in Form eines vorgefertigten Druckschlauches mit einem Geflechtsschlauch (13), der einen Innenschlauch (12) umgibt, wobei der vorgebildete Schlauchkörper (10) an seinen Enden (2, 3) Anschlußteile (4, 5) zur Montage des Schlauches (1) aufweist mit je einem Klemmbund (9), der den Schlauchkörper (10) abdichtend mit den entsprechenden Anschlußteilen (4, 5) verbindet, wobei der Außendurchmesser der Anschlußteile (4, 5) größer ist als der des Schlauchkörpers (10), und einem den Schlauchkörper im wesentlichen über seine ganze Länge umgebenden vorgebildeten Hüllschlauch (14), der mindestens teilweise elastisch aufweitbar ist und in entspanntem Zustand einen Innendurchmesser aufweist, der im wesentlichen gleich ist wie der Außendurchmesser des Schlauchkörpers (10) und wobei der Hüllschlauch (14) den Schlauchkörper (10) spielfrei umgibt, relativ zu diesem verschiebbar ist und mindestens einen Klemmbund (9) übergreift.

2. Sanitärschlauch nach Anspruch 1, **dadurch gekennzeichnet, daß** der Hüllschlauch (14) eine glatte Innenseite aufweist und mechanisch auf der Oberfläche des Schlauchkörpers (10) aufliegt.

3. Sanitärschlauch nach Anspruch 1 oder 2, **dadurch gekennzeichnet, daß** der Hüllschlauch (14) relativ zum Schlauchkörper (10) gegen einen Reibungswiderstand verschiebbar ist, der vorzugsweise im Bereich von 0,025 bis 0,125 kp/cm² liegt.

4. Sanitärschlauch nach einem der vorhergehenden Ansprüche, **dadurch gekennzeichnet, daß** der Hüllschlauch (14) bei Umgebungstemperatur um mehr als 15 %, insbesondere um mehr als 25 % seines Durchmessers elastisch aufweitbar ist.

5. Sanitärschlauch nach einem der vorhergehenden Ansprüche, **dadurch gekennzeichnet, daß** die Struktur (16) des Geflechtsschlauches (13) an der Oberfläche des Hüllschlauches (14) erkennbar, insbesondere sichtbar und/oder fühlbar ist.

6. Sanitärschlauch nach einem der vorhergehenden Ansprüche, **dadurch gekennzeichnet, daß** der Hüllschlauch (14) an einer Oberfläche, insbesondere seiner Außenfläche, eine gesonderte Farbschicht (15) aufweist, die insbesondere eine Metallisierung ist.

7. Sanitärschlauch nach Anspruch 6, **dadurch gekennzeichnet, daß** die Farbschicht Teil mindestens einer den Hüllschlauch (14) umgebenden Heißprägefolie (15) ist.

8. Sanitärschlauch nach Anspruch 6 oder 7, **dadurch gekennzeichnet, daß** die Farbschicht (15) des Hüllschlauches

9. Verfahren zur Herstellung des Schlauches nach einem der vorhergehenden Ansprüche, **dadurch gekennzeichnet, dass** ein mindestens teilweise elastischer flexibler Hüllschlauch mit einem Innendurchmesser, der im wesentlichen dem Außendurchmesser des Schlauchkörpers entspricht, durch Einwirkung von mechanischen, insbesondere pneumatischen Mitteln aufgeweitet wird und der Hüllschlauch im aufgeweiteten Zustand, während die aufweitenden Mittel auf den Hüllschlauch einwirken, durch Relativbewegung über den zu überziehenden Schlauchkörper, der mit Anschlußteilen versehen ist, wobei die Anschlußteile je einem Klemmbund aufweisen, der den Schlauchkörper abdichtend mit den entsprechenden Anschlußteil verbindet und der Außendurchmesser der Anschlußteile größer ist als der Außerdurchmesser des Schlauchkörpers, geführt wird und die aufweitenden Mittel dann entfernt werden, so dass sich der Hüllschlauch durch seine Eigenelastizität im Durchmesser wieder verjüngt und auf den Schlauchkörper vollflächig anlegt und mindestens einen Klemmbund übergreift. (14) mit einer durchsichtigen Schutzschicht überzogen ist.

10. Verfahren nach Anspruch 9, **dadurch gekennzeichnet, daß** die Aufweitung und Verjüngung im wesentlichen bei Umgebungstemperatur durchgeführt werden.

11. Verfahren nach Anspruch 9 oder 10, **dadurch gekennzeichnet, daß** das Innere des Hüllschlauches mit einem höheren Luftdruck beaufschlagt wird als zur Aufweitung des Hüllschlauches auf den zum Einschieben des Schlauchkörpers benötigten erweiterten Durchmesser erforderlich ist.

12. Verfahren nach einem der Ansprüche 9 bis 11, **dadurch gekennzeichnet, daß** die Aufweitung des Hüllschlauches mechanisch begrenzt wird, vorzugsweise die Aufweitung des Hüllschlauches gegen die Innenwandung einer rohrförmigen Hülse vorgenommen wird.

13. Verfahren nach einem der Ansprüche 9 bis 12, **dadurch gekennzeichnet, daß** der Hüllschlauch während der Aufweitung mit Druckluft mindestens teilweise durchströmt wird und hierzu an mindestens einem Ende teilweise offen ist.

14. Verfahren nach einem der Ansprüche 9 bis 13, **dadurch gekennzeichnet, daß** die Druckluft zum Aufweiten des Hüllschlauches durch den zu überziehenden Schlauchkörper in den Hüllschlauch eingeführt wird.

15. Verfahren nach einem der Ansprüche 9 bis 14, **dadurch gekennzeichnet, daß** der zu überziehende Schlauchkörper auf einem Dorn gehalten wird, der vorzugsweise als druckluftführender Hohldorn ausgebildet ist, und der Schlauchkörper mit dem Dorn in den aufgeweiteten Hüllschlauch eingeführt wird.

16. Verfahren nach einem der Ansprüche 9 bis 15, **dadurch gekennzeichnet, daß** der Schlauch von einem Schlauchvorrat abgezogen und vor dem Beaufschlagen mit Druckluft am vorratsseitigen Ende verschlossen, insbesondere reversibel zugeklemmt wird.

17. Verfahren nach einem der Ansprüche 9 bis 16, **dadurch gekennzeichnet, daß** der Hüllschlauch mit Hilfe eines bereits überzogenen Schlauchkörpers von einem Schlauchvorrat abgezogen und insbesondere in die Aufweitbegrenzungseinrichtung eingezogen wird.

18. Verfahren nach einem der Ansprüche 9 bis 17, **dadurch gekennzeichnet, daß** ein mit dem Hüllschlauch überzogener Sanitärschlauch von überschüssigem Hüllschlauch an gewünschter Stelle, insbesondere im Bereich eines am Schlauchende befestigten, ggf. mit überzogenem Anschlußteils abgelängt wird.

19. Vorrichtung zur Durchführung des Verfahrens nach einem der Ansprüche 9 bis 18 und zur Herstellung eines Sanitörschlauches nach einem der Ansprüche 1-8, **gekennzeichnet durch** eine reversibel arbeitende mechanische, insbesondere pneumatische Aufweiteinrichtung (24, 25) für den Hüllschlauch (14), eine Halteeinrichtung (25) für den flexiblen Schlauchkörper (10) und eine Vorschubeinrichtung (17, 18) zum relativen Ineinanderschieben von Schlauchkörper (10) in den aufgeweiteten Hüllschlauch (14).

20. Vorrichtung nach Anspruch 19, **dadurch gekennzeichnet, daß** die Aufweiteinrichtung einen Aufweitbegrenzer (25) für den Hüllschlauch (14) aufweist, der den Hüllschlauch während der Aufweitung umgibt und vorzugsweise rohrförmig ist.

21. Vorrichtung nach Anspruch 19 oder 20, **dadurch gekennzeichnet, daß** die Halteeinrichtung (25) gleichzeitig Teil der Aufweiteinrichtung (24, 25) ist und insbesondere einen mit einer Druckluftquelle verbindbaren Hohldorn (25) aufweist, auf dem der zu überziehende Schlauchkörper (10) ausrichtbar ist.

22. Vorrichtung nach einem der Ansprüche 19 bis 21, **dadurch gekennzeichnet, daß** die Halteeinrichtung (25) für den Schlauchkörper (10) mit der Vorschubeinrichtung (17, 18) verbunden ist und der Schlauchkörper (10) durch die Vorschubeinrichtung (17, 18) in den Hüllschlauch (14) einführbar ist.

23. Vorrichtung anch einem der Ansprüche 19 bis 22, **dadurch gekennzeichnet, daß** die Vorschubeinrichtung (17, 18) vor- und zurückbewegbar ist und als Abziehvorrichtung des Hüllschlauches (14) von einem Vorrat (22) und insbesondere als Einziehvorrichtung zum Einziehen des Hüllschlauches in die Aufweiteinrichtung (24, 25) ausgebildet ist.

24. Vorrichtung nach einem der Ansprüche 19 bis 23, **dadurch gekennzeichnet, daß** sie eine Schneideeinrichtung (31) aufweist, die Hüllschlauchabschnitte (14), insbesondere bereits auf dem Schlauchkörper (10) befindliche Hüllschlauchabschnitte (14) vom Hüllschlauchvorrat (22) ablängt.

25. Vorrichtung nach einem der Ansprüche 19 bis 24, **dadurch gekennzeichnet, daß** die Aufweiteinrichtung (24, 25) eine Abdichteinrichtung (30), insbesondere eine Klemmeinrichtung, aufweist, die den Hüllschlauch (14) an einer Stelle, die insbesondere noch zu dem Schlauchvorrat gehört, abdichtet.

26. Vorrichtung nach einem der Ansprüche 20 bis 25, **dadurch gekennzeichnet, daß** der Aufweitbegrenzer (24) einen lichten, vorzugsweise kreisförmigen Querschnitt besitzt, dessen Durchmesser um ca. 10 bis 30 %, insbesondere ca. 20 % größer ist als der Durchmesser der dicksten, in den aufgeweiteten Hüllschlauch (14) einzuführenden Teile (4, 5) des Schlauchkörpers (10).

## Claims

1. Sanitary hose, particularly connecting hose for the connection of a sanitary fitting to a water supply line, with a prefabricated, flexible, at least one-layer hose body (10) in the form of a prefabricated pressure hose with a braided hose (13), which surrounds an inner hose (12), the prefabricated hose body (10)having at its ends (2, 3) connection parts (4, 5) for the fitting of the hose (1) with in each case one clamping collar (9), which sealingly connects the hose body (10) to the corresponding connection parts (4, 5), the external diameter of the connection parts (4, 5) being larger than that of the hose body (10) and a prefabricated enveloping hose (14) surrounding the hose body over substantially its entire length and which is at least partly elastically expandable and in the relaxed state has an internal diameter substantially the same as the external diameter of the hose body (10) and in which the enveloping hose (14) surrounds the hose body (10) in clearance-free manner, is displaceable relative thereto and engages over at least one clamping collar (9).

2. Sanitary hose according to claim 1, **characterized in that** the enveloping hose (14) has a smooth inside and rests mechanically on the surface of the hose body (10).

3. Sanitary hose according to claim 1 or 2, **characterized in that** the enveloping hose (14) is displaceable relative to the hose body (10) counter to a frictional resistance, which is preferably in the range 0.025 to 0.125 kp/cmy.

4. Sanitary hose according to one of the preceding claims, **characterized in that** the enveloping hose (14) is elastically expandable at ambient temperature by more than 15%, particularly more than 25% of its diameter.

5. Sanitary hose according to one of the preceding claims, **characterized in that** the structure (16) of the braided hose (13) is detectable, particularly visible and/or tangible at the surface of the enveloping hose (14).

6. Sanitary hose according to one of the preceding claims, **characterized in that** the enveloping hose (14) has on its surface, particularly its outer surface, a separate colour coating (15), which is in particular a metallization.

7. Sanitary hose according to claim 6, **characterized in that** the colour coating is part of at least one hot stamping film (15) surrounding the enveloping hose (14).

8. Sanitary hose according to claim 6 or 7, **characterized in that** the colour coating (15) of the enveloping hose (14) is covered with a transparent protective coating.

9. Method for the manufacture of the hose according to one of the preceding claims, **characterized in that** an at least partly elastic, flexible enveloping hose with an internal diameter substantially corresponding to the external diameter of the hose body, is expanded by the action of mechanical, particularly pneumatic means and in the expanded state and while the expanding means act on the enveloping hose the latter is guided by relative movement over the hose body to be covered and which is provided with connecting parts, each of said connecting parts having a clamping collar, which sealingly connects the hose body with the corresponding connecting part, the external diameter of the connecting parts being larger than the external diameter of the hose body, the expanding means then being removed, so that the enveloping hose undergoes a diameter reduction again as a result of its intrinsic elasticity and engages in full surface manner on the hose body and engages over at least one clamping collar.

10. Method according to claim 9, **characterized in that** the expansion and contraction are essentially performed at ambient temperature.

11. Method according to claim 9 or 10, **characterized in that** the interior of the enveloping hose is subject to a higher air pressure than is necessary for expanding the enveloping hose to the increased diameter necessary for inserting the hose body.

12. Method according to one of the claims 9 to 11, **characterized in that** the expansion of the enveloping hose is mechanically limited and preferably the expansion of the enveloping hose takes place against the inner wall of a tubular sleeve.

13. Method according to one of the claims 9 to 12, **characterized in that** during expansion the enveloping hose is subject to an at least partial throughflow of compressed air and for this purpose is partly open at at least one end.

14. Method according to one of the claims 9 to 13, **characterized in that** the compressed air for expanding the enveloping hose is introduced into the latter through the hose body to be covered.

15. Method according to one of the claims 9 to 14, **characterized in that** the hose body to be covered is held on a mandrel, which is preferably constructed as a compressed air-carrying hollow mandrel and the hose body together with the mandrel is introduced into the expanded enveloping hose.

16. Method according to one of the claims 9 to 15, **characterized in that** the hose is drawn from a hose supply and prior to the action of compressed air is closed, particularly reversible clamped closed at the supply-side end.

17. Method according to one of the claims 9 to 16, **characterized in that** the tubular hose is drawn with the aid of an already covered hose body from a hose supply and is in particular drawn into the expansion limiter.

18. Method according to one of the claims 9 to 17, **characterized in that** a sanitary hose covered with the enveloping hose is cut to length from the excess enveloping hose at the desired point, particularly in the vicinity of a connecting part, which is optionally also covered, fixed to the hose end.

19. Apparatus for performing the method according to one of the claims 9 to 18 and for the manufacture of a sanitary hose according to one of the claims 1 to 8, **characterized by** a reversibly operating mechanical, particularly pneumatic expansion means (24, 25) for the enveloping hose (14), a holding device (25) for the flexible hose body (10) and a feed device (17, 18) for the relative telescoping of the hose body (10) in the expanded enveloping hose (14).

20. Apparatus according to claim 19, **characterized in that** the expansion means has an expansion limiter (25) for the enveloping hose (14), which surrounds the latter during expansion and is preferably tubular.

21. Apparatus according to claim 19 or 20, **characterized in that** the holding device (25) is simultaneously part of the expansion means (24, 25) and is in particular a hollow mandrel (25) connectable to a compressed air source with respect to which the hose body (10) to be covered can be oriented.

22. Apparatus according to one of the claims 19 to 21, **characterized in that** the holding device (25) for the hose body (10) is connected to the feed device (17, 18) and the hose body (10) can be introduced through the feed device (17, 18) into the enveloping hose (14).

23. Apparatus according to one of the claims 19 to 22, **characterized in that** the feed device (17, 18) can be moved forwards and backwards and is constructed as a device for drawing the enveloping hose (14) from a supply (22) and in particular as a retracting device for retracting the enveloping hose into the expansion means (24, 25).

24. Apparatus according to one of the claims 19 to 23, **characterized in that** it has a cutting device (31), which cuts to length the enveloping hose sections (14), particularly when still located on the hose body (10), from the enveloping hose supply (22).

25. Apparatus according to one of the claims 19 to 24, **characterized in that** the expansion means (24, 25) has a sealing device (30), particularly a clamping device, which seals the enveloping hose (14) at one location, which in particular still belongs to the hose supply.

26. Apparatus according to one of the claims 20 to 25, **characterized in that** the expansion limiter (24) has an internal, preferably circular cross-section, whose diameter is approximately 10 to 30%, particularly approximately 20% larger than the diameter of the thickest parts (4, 5) of the hose body (10) to be introduced into the expanded enveloping hose (14).

## Revendications

1. Tuyau souple pour sanitaire, en particulier pour le raccordement à une robinetterie de sanitaire sur une arrivée d'eau, comprenant un corps de tuyau (10) préformé, au moins monocouche sous forme d'un tuyau flexible de pression préfabriqué avec une gaine tressée (13) qui entoure une gaine interne (12), le corps de tuyau préformé (10) présentant à ses extrémités (2, 3) des pièces de raccord (4, 5) pour le montage du tuyau flexible (1), avec respectivement un collet de serrage (9) qui relie de manière étanche le corps de tuyau (10) aux pièces de raccord correspondantes (4,5), le diamètre externe des pièces de raccord (4, 5) étant supérieur à celui du corps de tuyau (10) et comprenant une gaine d'enrobage (14) préformée entourant sensiblement le corps de tuyau sur toute sa longueur, gaine d'enrobage qui est extensible du moins partiellement de manière élastique et qui présente à l'état élargi un diamètre interne qui est sensiblement identique au diamètre externe du corps de tuyau (10) et la gaine d'enrobage (14) entourant sans jeu le corps de tuyau (10), pouvant coulisser de manière relative par rapport au corps de tuyau et recouvrant au moins un collet de serrage (9).

2. Tuyau souple pour sanitaire selon la revendication 1, **caractérisé en ce que** la gaine d'enrobage (14) présente une face interne lisse et repose mécaniquement sur la surface du corps de tuyau (10).

3. Tuyau souple pour sanitaire selon la revendication 1 ou 2, **caractérisé en ce que** la gaine d'enrobage (14) est mobile par rapport au corps de tuyau (10) à l'encontre d'une résistance de friction comprise de préférence entre 0,025 et 0,125 kp/cm².

4. Tuyau souple selon l'une des revendications précédentes, **caractérisé en ce que** la gaine d'enrobage (14) est extensible de manière élastique à la température ambiante de plus de 15 % en particulier de plus de 25 % de son diamètre.

5. Tuyau souple selon l'une des revendications précédentes, **caractérisé en ce que** la structure (16) de la gaine tressée (13) est reconnaissable à la surface de la gaine d'enrobage (14), en particulier visible et/ou palpable.

6. Tuyau souple selon l'une des revendications précédentes, **caractérisé en ce que** la gaine d'enrobage (14) présente sur sa surface supérieure en particulier sur sa surface externe une couche de couleur (15) séparée qui est en particulier une métallisation.

7. Tuyau souple pour sanitaire selon la revendication 6, **caractérisé en ce que** la couche de couleur fait au moins partie d'une feuille (15) d'estampage à chaud entourant la gaine d'enrobage (14).

8. Tuyau souple pour sanitaire selon la revendication 6 ou 7, **caractérisé en ce que** la couche de couleur (15) de la gaine d'enrobage (14) est recouverte d'une couche de protection transparente.

9. Procédé de fabrication du tuyau souple selon l'une des revendications précédentes, **caractérisé en ce qu'**une gaine d'enrobage flexible au moins partiellement élastique avec un diamètre interne qui correspond sensiblement au diamètre externe du corps de tuyau est élargie sous l'action de moyens mécaniques en particulier pneumatiques et la gaine d'enrobage est guidée à l'état étiré, tandis que les moyens d'extension agissent sur la gaine d'enrobage par un déplacement relatif sur le corps de tuyau à recouvrir, corps qui est muni de pièces de raccordement , les pièces de raccordement présentant chacune un collet de serrage qui relie le corps de tuyau de manière étanche à la pièce de raccord correspondante et le diamètre externe des pièces de raccordement étant plus grande que le diamètre externe du corps de tuyau, les moyens d'élargissement étant ensuite retirés de sorte que la gaine d'enrobage se rétrécit dans son diamètre par son élasticité intrinsèque et s'applique sur le corps de tuyau et recouvre au moins un collier de serrage.

10. Procédé selon la revendication 9, **caractérisé en ce que** l'élargissement et le rétrécissement sont effectués sensiblement à température ambiante.

11. Tuyau souple pour sanitaire selon la revendication 9 ou 10, **caractérisé en ce que** l'intérieur de la gaine d'enrobage subit un air comprimé supérieur à celui nécessaire à l'élargissement de la gaine d'enrobage au diamètre élargie nécessaire à l'insertion du corps de tuyau.

12. Procédé selon l'une des revendications 9 à 11, **caractérisé en ce que** l'élargissement de gaine d'enrobage est mécaniquement limité, de préférence l'élargissement de la gaine d'enrobage est exécuté en direction de la paroi interne d'un fourreau tubulaire.

13. Procédé selon l'une des revendications 9 à 12, **caractérisé en ce que** le tuyau souple est traversé au moins partiellement pendant l'élargissement par de l'air comprimé et est ouvert à une extrémité au moins partiellement.

14. Procédé selon l'une des revendications 9 à 13, **caractérisé en ce que** l'air comprimé est introduit dans la gaine d'enrobage pour l'élargissement de la gaine d'enrobage par le corps de tuyau à recouvrir.

15. Procédé selon l'une des revendications 9 à 14, **caractérisé en ce que** le corps de tuyau à recouvrir est maintenu sur un mandrin qui est réalisé de préférence comme un mandrin creux guidant l'air comprimé et **en ce que** le corps de tuyau est introduit avec le mandrin dans la gaine d'enrobage élargie.

16. Procédé selon l'une des revendications 9 à 15, **caractérisé en ce que** le tuyau souple est prélevé d'une réserve de tuyau souple et est fermé, en particulier fermé par serrage de manière réversible avant de subir l'impact de l'air comprimé, et ce, à l'extrémité côté réserve.

17. Procédé selon l'une des revendications 9 à 16, **caractérisé en ce que** la gaine d'enrobage est prélevée d'une réserve de tuyau souple à l'aide du corps de tuyau déjà recouvert et en particulier est introduite dans le dispositif de limitation d'élargissement.

18. procédé selon l'une des revendications 9 à 17, **caractérisé en ce qu'**un tuyau souple pour sanitaire recouvert de la gaine d'enrobage est sectionné à l'endroit souhaité de la gaine d'enrobage en excès, en particulier dans la zone d'une pièce de raccord fixée sur l'extrémité du tuyau et éventuellement recouverte aussi.

19. Dispositif pour la mise en oeuvre du procédé selon l'une des revendications 9 à 18 et pour la fabrication d'un tuyau souple de sanitaire selon l'une des revendications 1 à 8, **caractérisé par** un dispositif d'élargissement mécanique réversible, en particulier pneumatique (24, 25) pour une gaine d'enrobage (14), un dispositif de retenue (25) pour le corps de tuyau (10) et un dispositif d'avance (17, 18) pour l'enfilement relatif l'un dans l'autre du corps de tuyau (10) dans la gaine d'enrobage (14) élargie.

20. Dispositif selon la revendication 19, **caractérisé en ce que** le dispositif d'élargissement présente un limiteur d'élargissement (25) pour la gaine d'enrobage (14) qui entoure la gaine d'enrobage pendant l'élargissement et qui est de préférence tubulaire.

21. Dispositif selon la revendication 19 ou 20, **caractérisé en ce que** le dispositif de retenue (25) fait en même temps partie du dispositif élargisseur (24, 25) et présente en particulier un mandrin creux (25) reliable à une source d'air comprimé sur lequel le corps de tuyau (10) à recouvrir peut être ajusté.

22. Dispositif selon l'une des revendications 19 à 21, **caractérisé en ce que** le dispositif de retenue (25) pour le corps de tuyau (10) est relié au dispositif d'avance (17, 18) et **en ce que** le corps de tuyau (10) peut être inséré dans la gaine d'enrobage (14) par le dispositif d'avance (17, 18).

23. Dispositif selon l'une des revendications 19 à 22, **caractérisé en ce que** le dispositif d'avance (17, 18) est mobile en avant et en arrière et est conçu comme dispositif de prélèvement de la gaine d'enrobage (14) d'une réserve (22) et en particulier comme dispositif d'insertion pour l'insertion de la gaine d'enrobage dans le dispositif élargisseur (24, 25).

24. Dispositif selon l'une des revendications 19 à 23, **caractérisé en ce qu'**il présente un dispositif de coupe (31) qui raccourcit des sections de gaine d'enrobage (14), en particulier des sections de gaine d'enrobage (14)se trouvant déjà sur le corps de tuyau (10) de la réserve (22) de gaine d'enrobage.

25. Dispositif selon l'une des revendications 19 à 24, **caractérisé en ce que** le dispositif élargisseur (24, 25) présente un dispositif d'étanchement (30) en particulier un dispositif de serrage qui rend étanche la gaine d'enrobage (14) à un endroit qui fait encore partie de la réserve de flexible.

26. Dispositif selon l'une des revendications 20 à 25, **caractérisé en ce que** le limiteur d'élargissement (24) présente une section interne de préférence circulaire dont le diamètre est de 10 à 30 % en particulier d'environ 20 % plus grand que le diamètre des parties (4, 5) du corps de tuyau (10) les plus épaisses qui sont à introduire dans la gaine d'enrobage (14) élargie.
